# EUROPEAN PATENT APPLICATION

(11) **EP 4 379 927 A1**
(43) Date of publication of application: **05.06.2024**
(21) Application number: 22919989.8
(22) Date of filing: 09.12.2022
(51) Int. Cl.: H01M 50/24, H01M 50/262, H01M 50/291

(54) **SEALING MEMBER, BATTERY, AND ELECTRICAL DEVICE**

(30) Priority: 17.01.2022 CN 202220115157 U
(71) Applicant: Contemporary Amperex Technology Co., Limited, Ningde, Fujian 352100 (CN)
(72) Inventor: WANG, Yongguang, Ningde, Fujian 352100 (CN); CHEN, Yifeng, Ningde, Fujian 352100 (CN); LIN, Zhuangzhuang, Ningde, Fujian 352100 (CN); LIU, Jianhua, Ningde, Fujian 352100 (CN); HUANG, Yangzhi, Ningde, Fujian 352100 (CN)
(74) Representative: Gong, Jinping
(86) International application number: PCT/CN2022/138010
(87) International publication number: WO 2023/134356

(57) **Abstract**

The present application provides a sealing member, a battery, and an electrical apparatus, wherein the sealing member includes: a main body (41) and a securing structure (42) disposed on the main body (41), the securing structure (42) being connected to a positioning structure (43) on a member to be sealed (50) to secure the sealing member (40) on the member to be sealed (50); wherein a surface of the securing structure (42) facing the member to be sealed (50) is provided with a recess (421), and the recess (421) is recessed in a direction away from the positioning structure (43) to prevent the sealing member (40) from being fitted reversely. The sealing member (40) provided by the present application can prevent the sealing member (40) from being fitted reversely.

## Description

### Cross-reference

The present application is based on Chinese patent application No. 202220115157.9, filed on Jan. 17, 2022 and entitled "SEALING MEMBER, BATTERY AND ELECTRICAL APPARATUS", which is incorporated into this application by reference in its entirety.

### Technical Field

The present application relates to the field of sealing technologies, and in particular, to a sealing member, a battery, and an electrical apparatus.

### Background

Sealing members, as parts that prevent leakage of fluids or solid particles and prevent external impurities such as dust or moisture from intruding into the interior of an apparatus, have found wide applications in daily life or manufacturing processes, e.g., sealing of storage vessels, sealing of fluid pipes, and sealing of mechanical equipment. Most of the sealing members are rubber products. The sealing member are fitted to a connection site of two components through elasticity of the rubber material itself, and tightened and secured to isolate the exchange of substances inside and outside the components.

When fitting the sealing members, it often occurs that the sealing members are fitted reversely, affecting sealing performance and fitting efficiency of the sealing members.

### Summary of the Invention

Based on this, the present application provides a sealing member, a battery, and an electrical apparatus, which can prevent the sealing member from being fitted reversely, thereby improving sealing performance and fitting efficiency of the sealing member.

In a first aspect, the present application provides a sealing member. The sealing member includes: a main body and a securing structure disposed on the main body, the securing structure being connected to a positioning structure on a member to be sealed to secure the sealing member on the member to be sealed; wherein a surface of the securing structure facing the member to be sealed is provided with a recess, and the recess is recessed in a direction away from the positioning structure to prevent the sealing member from being fitted reversely.

In a technical solution of embodiments of the present application, a fool-proof effect may be provided while mounting the sealing member to the member to be sealed, such that when the sealing member is fitted to the member to be sealed, an obvious projection will be produced while a mounting error occurs to the securing structure in a mounting direction, and a reminder is thus promptly made that the mounting direction of the sealing member is wrong, effectively preventing the sealing member from being fitted reversely, and thereby improving the sealing performance and fitting efficiency of the sealing member.

In some embodiments, the positioning structure is provided with an accommodating portion, which is used for accommodating the securing structure to achieve securing of the sealing member and the member to be sealed.

In the technical solution of the embodiments of the present application, the securing structure may be limited in the accommodating portion using the solution above to limit rotation and movement of the securing structure, so that securing for the sealing member is more effective.

In some embodiments, in the mounting direction of the sealing member, a dimension of the accommodating portion is equal to a distance between an upper surface of the securing structure and a bottom wall of the recess, the upper surface being a surface on the securing structure corresponding to the recess.

In the technical solution of the embodiments of the present application, the accommodating portion of the positioning structure may be allowed to be able to hold the securing structure, and an upper surface of the securing structure may be allowed to be flush with the member to be sealed, such that a projection is produced to remind of a mounting error when the mounting is incorrect.

In some embodiments, the securing structure is in interference fit with the positioning structure to achieve securing between the sealing member and the member to be sealed.

In the technical solution of the embodiments of the present application, the securing structure may be allowed to be less prone to slipping off from the positioning structure, firmly securing the securing structure in the positioning structure, such that securing between the sealing member and the member to be sealed is achieved.

In some embodiments, an end of the securing structure away from the main body is provided with a protrusion, and a lateral dimension of the protrusion along the main body is greater than that of the accommodating portion along the main body, so that securing between the securing structure and the member to be sealed is reinforced in the mounting direction of the sealing member.

In the technical solution of the embodiments of the present application, it is possible to limit parts of the securing structure other than the protrusion in the positioning structure along the mounting direction after the securing structure is connected to the positioning structure, to further reinforce a connection between the securing structure and the positioning structure, such that sealing of the sealing member for the member to be sealed is more effective.

In some embodiments, there are multiple securing structures to enhance the strength of connection between the sealing member and the member to be sealed.

In the technical solution of the embodiments of the present application, the sealing member may be secured on the member to be sealed in all bearings at multiple angles, thereby enhancing the strength of connection between the sealing member and the member to be sealed through the connection of the multiple securing structures to the positioning structure.

In some embodiments, the sealing member further includes a connecting segment, and the connecting segment is used to connect two adjacent securing structures. The connecting segment and the two adjacent securing structures enclose to form a circle, such that securing between the sealing member and the member to be sealed is reinforced.

In the technical solution of the embodiments of the present application, relative movement of the securing structure and the positioning structure may be further restricted in the mounting direction, to further prevent the securing structure from slipping off from the positioning structure, such that the connection between the sealing member and the member to be sealed is reinforced, and sealing between the sealing member and the member to be sealed is more effective.

In a second aspect, the present application provides a battery, including: a battery cell, a box, a cover, and a sealing member of any one of the above first aspect, wherein one end of the box is provided with an opening, the cover covers the opening, and the cover and the box form a sealed accommodating cavity through the sealing member for accommodating the battery cell.

In a third aspect, the present application provides an electrical apparatus, the electrical apparatus including the battery above, the battery being used to provide electrical energy.

In an embodiment of the present application, with the securing structure provided on the main body of the sealing member, and the recess provided on the surface of the securing structure facing the member to be sealed, when the sealing member is fitted to the member to be sealed, an obvious projection will be produced while a mounting error occurs to the securing structure in the mounting direction and plays a fool-proof role, thereby promptly reminding that the mounting is wrong, effectively preventing the sealing member from being fitted reversely, and improving sealing performance and fitting efficiency of the sealing member.

The above description is only an overview of the technical solutions of the present application. In order to more clearly understand the technical means of the present application to implement same according to the contents of the Specification, and in order to enable the above and other objectives, features and advantages of the present application to be more obvious and understandable, Detailed Description of the present application is exemplarily described below.

### Description of Drawings

Various other advantages and benefits will become apparent to those of ordinary skill in the art upon reading the following detailed description of the implementations. The drawings are for the purpose of illustrating the preferred implementations only and are not to be considered a limitation to the present application. Furthermore, in all the drawings, the same reference numerals represent the same components. In the drawings:
FIG. 1 is a structural schematic diagram of a vehicle according to an embodiment of the present application;
FIG. 2 is an exploded schematic diagram of a battery according to an embodiment of the present application;
FIG. 3 is a top structural schematic diagram for fitting of a sealing member with a member to be sealed according to an embodiment of the present application;
FIG. 4 is a top structural schematic diagram of a sealing member according to an embodiment of the present application;
FIG. 5 is a partially enlarged view of a position M in FIG. 3;
FIG. 6 is a sectional schematic diagram of a plane S in FIG. 5;
FIG. 7 is a structural schematic diagram of a positioning structure according to an embodiment of the present application;
FIG. 8 is a sectional structural schematic diagram of a securing structure at a line N in FIG. 6;
FIG. 9 is a top structural schematic diagram for fitting of a securing structure with a positioning structure according to an embodiment of the present application;
FIG. 10 is a partially enlarged view of a securing structure in FIG. 5;
FIG. 11 is a reversed structural schematic diagram of the securing structure in FIG. 10;
FIG. 12 is a partially enlarged view of a sealing member according to another embodiment of the present application;
FIG. 13 is a schematic diagram for a connection between a sealing member with a member to be sealed according to another embodiment of the present application;
FIG. 14 is a schematic diagram of a fitting result of a casing of a battery according to an embodiment of the present application; and
FIG. 15 is a schematic diagram for a connection of a sealing member with a member to be sealed according to another embodiment of the present application.

1000, vehicle; 100, battery; 10, cover; 20, housing; 30, battery module; 40, sealing member; 50, member to be sealed; 41, main body; 42, securing structure; 43, positioning structure; 44, connecting segment; 421, recess; 422, upper surface of securing structure; 423, protrusion; 4211, bottom wall of recess; 431, accommodating portion; b, interference face; d1, distance between upper surface of securing structure and bottom wall of recess; d2, interference amount; d3, lateral dimension of protrusion along main body; d4, lateral dimension of accommodating portion along main body; c, geometric center of securing structure; k, axis of main body ; p, horizontal plane where axis of main body is located.

### Detailed Description

Embodiments of the technical solutions of the present application will be described in detail below in conjunction with the drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "include/comprise" and "have" and any variations thereof in the Specification and the Claims of the present application and in the Description of Drawings above are intended to cover nonexclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the Specification does not necessarily refer to the same embodiment, nor is it a separate or alternative embodiment that is mutually exclusive with other embodiments. It is explicitly and implicitly understood by those skilled in the art that the embodiment described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally represents that previous and next associated objects form an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount", "join", "connect", "secure", etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

Sealing members, as parts that prevent leakage of fluids or solid particles and prevent external impurities such as dust or moisture from intruding into the interior of an apparatus, have found wide applications in daily life or manufacturing processes, e.g., sealing of storage vessels, sealing of fluid pipes, and sealing of mechanical equipment. The sealing member usually acts at a connection site between two components to prevent an internal substance from leaking to an external environment and prevent an external substance from intruding into an internal space.

Traditional sealing members are mostly rubber products. The sealing members are fitted to an interface of a member to be sealed through elasticity of the rubber material itself, and is tightened and secured, thereby achieving sealing of the member to be sealed. The sealing members may include many types according to their shapes. Commonly used ones include O-shaped sealing members, runway-type sealing members, rectangular sealing members, etc. Sealing members of different shapes are suitable for different applications. For example, rectangular sealing members are suitable for rectangular grooves, and O-shaped sealing members are suitable for static sealing and low-speed motion sealing. When the sealing members are in use, it often occurs that the sealing members are fitted reversely, affecting sealing performance and fitting efficiency of the sealing members.

Based on the above considerations, an embodiment of the present application provide a sealing member that may provide a prompt when the sealing member is fitted incorrectly to prevent the sealing member from being fitted reversely. The sealing member provided by the embodiment of the present application may be used to seal a member to be sealed, e.g., a sealing housing and a cover. Specifically, it may be used to seal a housing and a cover of a battery casing, thereby sealing a battery module in an accommodating cavity made up by the battery casing and the sealing member, and forming a battery. The battery may be suitable for various electrical apparatuses that can provide sources of power with electrical energy. For example, the electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes stationary or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

For the convenience of description, description is made with an example of the electrical apparatus as a vehicle 1000.

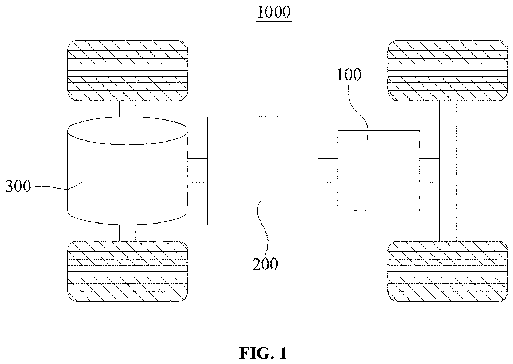

FIG. 1 is a schematic structural diagram of a vehicle 1000 provided in an embodiment of the present application. Referring to FIG. 1, the vehicle 1000 may be a fuel vehicle, a gas vehicle, or a new energy vehicle. The new energy vehicle may be a battery electric vehicle, a hybrid electric vehicle, an extended-range vehicle etc. The vehicle 1000 is internally provided with a battery 100, and the battery 100 may be provided at a bottom and/or head and/or tail of the vehicle 1000. The battery 100 may be used to power the vehicle 1000. For example, the battery 100 may be used as an operating power source for the vehicle 1000. The vehicle 1000 may further include a controller 200 and a motor 300. The controller 200 is used to control the battery 100 to power the motor 300, for example, to meet working power demands during starting, navigation and driving of the vehicle 1000.

In some embodiments of the present application, the battery 100 not only may serve as an operating power source for the vehicle 1000, but also may serve as a driving power source for the vehicle 1000, thus replacing or partially replacing fuel or natural gas to provide driving power for the vehicle 1000.

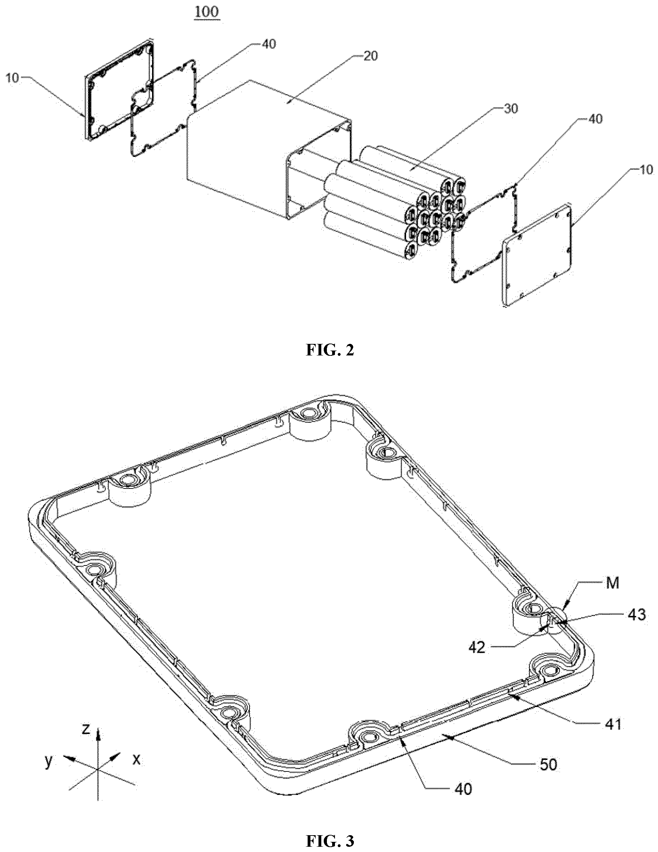

FIG. 2 is an exploded schematic view of a battery 100 provided in an embodiment of the present application. As shown in FIG. 2, the battery 100 provided in the embodiment of the present application includes a cover 10, a housing 20, a battery module, and a sealing member 40, wherein the cover 10 and the housing 20 are in covering fit with each other as a member to be sealed 50, forming an accommodating cavity, and the battery module is accommodated in the accommodating cavity. On this basis, with the sealing member 40 provided in the embodiment of the present application to allow for sealing between the cover 10 and housing 20 in covering fit to form the sealed accommodating cavity so as to ensure that the battery module is accommodated in the closed accommodating cavity. Optionally, the housing 20 may be a hollow structure with an opening in one end, and one end of the opening is covered through one cover 10. The housing 20 may also be a channel structure with an opening in each end, and the two ends of the opening are covered through the covers 10, respectively. Specifically, the housing 20 and the cover 10 match each other in shape and size. For example, when the housing 20 is a cylinder, the cover 10 is circular, and when the housing 20 is a rectangular parallelepiped, the cover 10 is square, which is not limited in the present application.

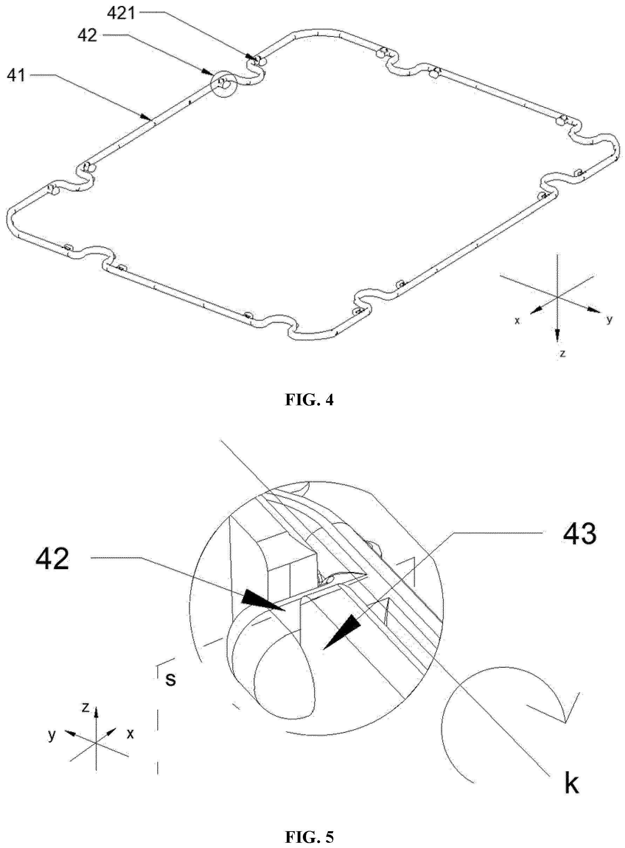

FIG. 3 is a top structural schematic diagram for fitting of a sealing member 40 with a member to be sealed 50 provided in an embodiment of the present application, and FIG. 4 is a top structural schematic diagram of a sealing member 40 provided in an embodiment of the present application. As shown in FIGS. 3 and 4, the sealing member 40 provided in the embodiments of the present application includes a main body 41 and a securing structure 42 provided on the main body 41. The securing structure 42 is connected to a positioning structure 43 on the member to be sealed 50, to secure the sealing member 40 on the member to be sealed 50. A surface of the securing structure 42 facing the member to be sealed 50 is provided with a recess 421. The recess 421 is recessed in a direction away from the positioning structure 43 to prevent the sealing member 40 from being fitted reversely.

As shown in FIG. 3, the main body 41 of the sealing member 40 is provided with the securing structure 42 thereon. A position of the member to be sealed 50 corresponding to the securing structure 42 is provided with the positioning structure 43. The securing structure 42 is connected to the positioning structure 43 to limit the position of the securing structure 42, such that securing between the member to be sealed 50 and the sealing member 40 is achieved. Referring to the sealing member 40 shown in FIG. 4, the securing structure 42, based on the main body 41 extending in a direction facing the positioning structure 43 on the member to be sealed 50, cooperates with the positioning structure 43 at the corresponding position on the member to be sealed 50 to complete securing of the sealing member 40 and the member to be sealed 50. Specifically, in conjunction with what that is shown in FIGS. 3 and 4, at mounting of the sealing member 40, with the sealing member 40 being moved in an opposite direction to a direction z shown in FIG. 3 or 4 to approach the member to be sealed 50, or with the member to be sealed 50 being moved to approach the sealing member 40 in the direction z, the securing structure 42 and the positioning structure 43 are brought in connection at corresponding positions to limit movement of the securing structure 42, thereby limiting the relative movement of the sealing member 40 and the member to be sealed 50, and securing the sealing member 40 on the member 50 to be sealed.

FIG. 5 is a partial enlarged view corresponding to a position M in FIG. 3 provided in an embodiment of the present application. As shown in FIG. 5, with a sealing member 40 being moved in an opposite direction to a direction z to approach a member to be sealed 50, or with the member to be sealed 50 being moved along the direction z to approach the sealing member 40, a securing structure 42 on the sealing member 40 is thus connected with a positioning structure 43 on the member to be sealed 50, such that securing between the member to be sealed 50 and the sealing member 40 is achieved. In addition, referring to FIG. 5, it can be seen that the sealing member is secured better in all directions on the following basis: the securing structure 42 with a certain length extends from a main body 41, there is a distance between one end of the securing structure 42 away from the main body 41 and the main body 41, and the securing structure 42 is blocked by the positioning structure 43 when the main body 41 is rotated around an axis k as a center, thereby limiting the rotation of the main body 41 to limit rotation of the sealing member 40.

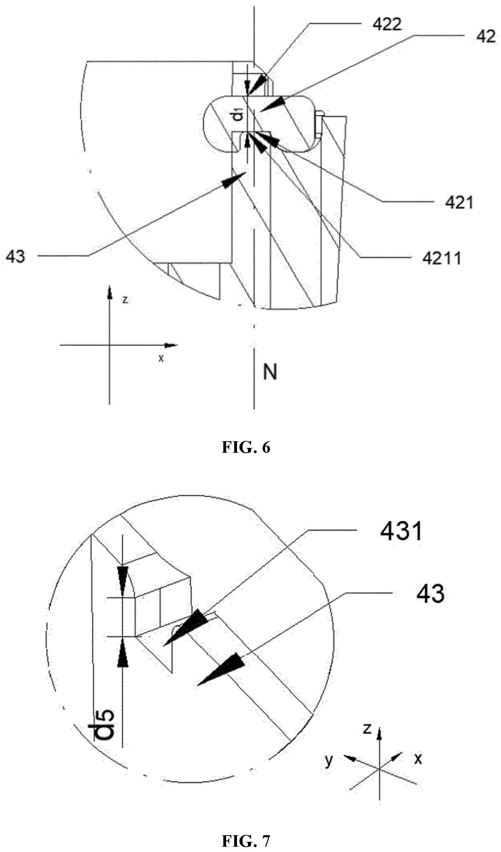

FIG. 6 is a sectional schematic diaphragm of a plane s of FIG. 5 provided in an embodiment of the present application. As shown in FIG. 6, in a sectional view obtained by sectioning, at the plane s, the connection between the securing structure 42 and the positioning structure 43 shown at M in FIG. 3, it can be seen that a side of the securing structure 42 facing the positioning structure 43 and in contact with the positioning structure 43 is provided with a recess 421, and the recess 421 is recessed in a direction away from the positioning structure 43 (e.g., a direction z in FIG. 6). The recess 421 allows the securing structure 42 to match the positioning structure 43 in shape in a mounting direction, but allows the securing structure 42 not to match the positioning structure 43 in shape in an opposite direction to the mounting direction. At connection of the securing structure 42 to the positioning structure 43, with the recess 421 of the securing structure 42 not facing the positioning structure 43, that is, with a side of the securing structure 42 opposite the recess 421 facing the positioning structure 43, since that side opposite to the recess 421 is not provided with a recess 421, that side cannot fall into the positioning structure 43 under the action of the recess 421 while connected to the positioning structure 43, and a projection will, therefore, be produced, which indicates that the current mounting way is wrong. Therefore, it is prevented that a sealing member 40 is mounted reversely, and sealing performance and fitting efficiency of the sealing member 40 are improved.

It can be understood that a degree of tight fit between the sealing member 40 and a member to be sealed 50 determines sealing effect of the sealing member 40 for the member to be sealed 50. When the sealing member 40 is mounted on the member to be sealed 50, in order to achieve better sealing effect, the sealing member 40 is often tightened on the member to be sealed 50 through its own elasticity, such that presence of a gap at the fit between the sealing member 40 and the member to be sealed 50 is avoided. Therefore, failure to promptly remind that the sealing member 40 is mounted reversely affects sealing strength. Remounting subsequent to the sealing member 40 being mounted reversely takes extra time and effort. Moreover, if mounting of the sealing member 40 to the member to be sealed 50 occurs on a continuously operating production line, sealing of subsequent members to be sealed 50 may further affected.

With respect to the sealing member 40 provided in the embodiment of the present application, with the securing structure 42 provided on a main body 41 of the sealing member 40, and the recess 421 provided on a surface of the securing structure 42 facing the member to be sealed 50, a fool-proof effect may be provided while the sealing member 40 is mounted to the member to be sealed 50, such that when the sealing member 40 is fitted to the member to be sealed 50, an obvious projection will be produced while a mounting error occurs to the securing structure 42 in the mounting direction, allowing for a prompt reminder that the mounting direction is wrong, effectively preventing the sealing member 40 from being fitted reversely, and thus improving sealing performance and fitting efficiency of the sealing member 40.

FIG. 7 is a structural schematic diagram of a positioning structure 43 provided in an embodiment of the present application. As shown in FIG. 7, in some embodiments, the positioning structure 43 is provided with an accommodating portion 431 thereon for accommodating a securing structure 42 to achieve securing of a sealing member 40 and a member to be sealed 50.

Specifically, the shape and dimension of the accommodating portion 431 match those of a recess 421 of the securing structure 42. For example, when the securing structure 42 is cylindrical, the accommodating portion 431 is also cylindrical. At mounting of the sealing member 40, the securing structure 42 on the sealing member 40 is placed in the accommodating portion 431 of the positioning structure 43. The recess 421 of the securing structure 42 cooperates with the accommodating portion 431 to secure the securing structure 42 of the sealing member 40 onto the positioning structure 43 of the member to be sealed 50.

Exemplarily, as shown in FIG. 7, the accommodating portion 431 may be one groove that matches the securing structure 42 in dimension. A side of the groove facing the securing structure 42 has a same dimension as a side of the recess 421 of the securing structure 42 facing the positioning structure 43. The securing structure 42 is fastened into the groove from an opening thereof, and cooperates with the groove to create effective securing. The shape of the side of the groove facing the securing structure 42 matches that of the recess 421 of the securing structure 42. For example, when the side of the recess 421 facing the positioning structure 43 is square, the side of the groove facing the securing structure 42 and in contact with the recess 421 is also square.

With respect to the sealing member 40 provided in the embodiment of the present application, with the accommodating portion 431 for accommodating the securing structure 42 provided on the positioning structure 43 of the member to be sealed 50, the securing structure 42 may be confined in the accommodating portion 431, such that rotation and movement of the securing structure 42 is limited, and securing for the sealing member 40 is more effective.

As show in FIG. 6, in some embodiments, in the mounting direction of the sealing member 40, a dimension of the accommodating portion 431 is equal to a distance d1 between an upper surface 422 of the securing structure 42 and a bottom wall 4211 of the recess 421, and the upper surface is a surface on the securing structure 42 corresponding to the recess 421.

The mounting direction refers to a direction in which the sealing member 40 and the member to be sealed 50 approach to each other such that the securing structure 42 is connected with the positioning structure 43. The upper surface 422 of the securing structure 42 refers to a side of the securing structure 42 away from the positioning structure 43, and the bottom wall 4211 of the recess 421 refers to a side of the recess 421 contacting the positioning structure 43 in the mounting direction.

It can be understood that the accommodating portion 431 has a certain depth for accommodating the securing structure 42, and the depth of the accommodating portion 431 is a dimension d5 of the accommodating portion 431 along the mounting direction. The dimension d5 of the accommodating portion 431 is consistent with the distance d1 between the upper surface 422 of the securing structure 42 and the bottom wall 4211 of the recess 421. When the securing structure 42 is mounted to the positioning structure 43, as the upper surface 422 of the securing structure 42 is flush with the member to be sealed 50, exposure of the member to be sealed 50 that affects the sealing is avoided, thereby improving sealing effect.

With respect to the sealing member 40 provided in the embodiment of the present application, dimensions of the accommodating portion 431 are determined through those of the securing structure 42, such that the accommodating portion 431 of the positioning structure 43 may hold the securing structure 42; the upper surface 422 of the securing structure 42 is brought to be flush with the member to be sealed 50, such that a projection is produced to remind of a mounting error when the mounting is incorrect.

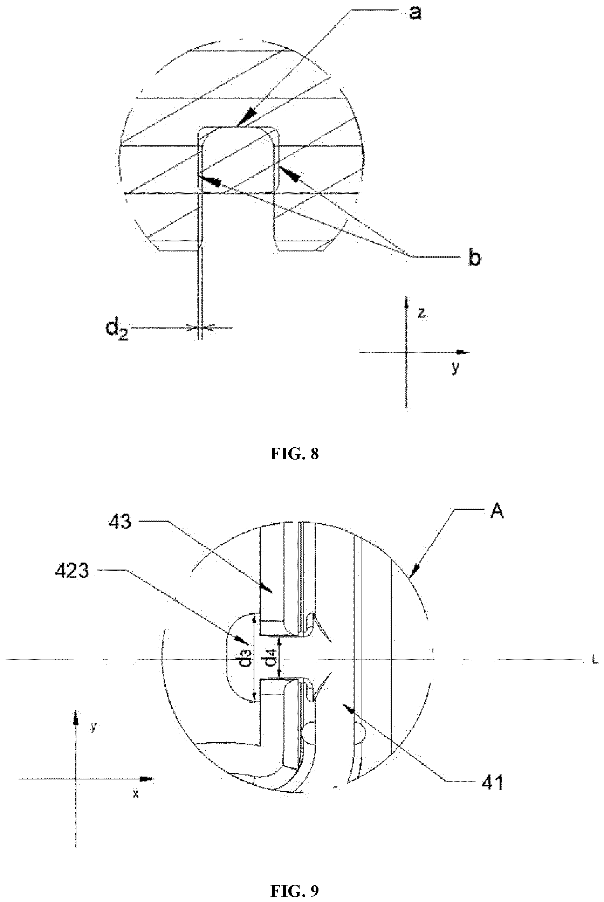

FIG. 8 is a sectional structural schematic diagram of a securing structure 42 at a line N in FIG. 6 provided in an embodiment of the present application. As shown in FIG. 8, in some embodiments, the securing structure 42 is in interference fit with a positioning structure 43, so as to achieve securing between a sealing member 40 and a member to be sealed 50.

Specifically, both sides of the securing structure 42 have an interference face b. When the securing structure 42 is fitted into the positioning structure 43, the interference face b of the securing structure 42 is in interference fit with the positioning structure 43, so that the securing structure 42 and the positioning structure 43 are put in firmer interference fit, and that the securing structure 42 is firmly secured in the positioning structure 43.

Optionally, an interference amount d2 between the interference face b and the positioning structure 43 is between 0-0.3 mm. For example, specifically, the interference amount d2 may be 0.1 mm.

With respect to the sealing member 40 provided in the embodiment of the present application, with the securing structure 42 brought in interference fit with the positioning structure 43 to allow the securing structure 42 to be less prone to slipping off from the positioning structure 43, the securing structure 42 is thus firmly secured in the positioning structure 43, so that securing between the sealing member 40 and the member to be sealed 50. is achieved.

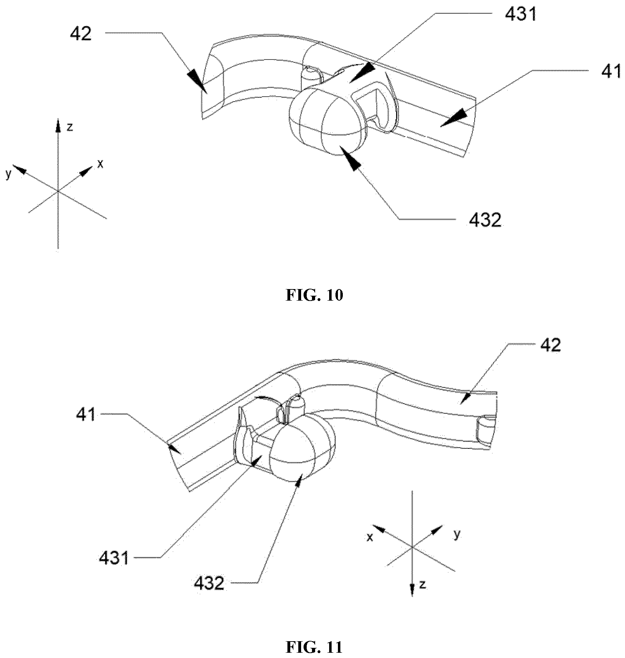

FIG. 9 is a top structural schematic diagram for fitting of a securing structure 42 with a positioning structure 43 provided in an embodiment of the present application. FIG. 10 is a partially enlarged view of the securing structure 42 in FIG. 5 provided in an embodiment of the present application. FIG. 11 is a reversed structural schematic diagram of the securing structure 42 in FIG. 10 provided in an embodiment of the present application. It can be seen with reference to FIGS. 9, 10, and 11 that, in some embodiments, an end of the securing structure 42 away from a main body 41 is provided with a protrusion 423, and a lateral dimension d3 of the protrusion 423 along the main body 41 is greater than a lateral dimension d4 of an accommodating portion 431 along the main body 41, so that securing between the securing structure 42 and the member to be sealed 50 is secured in a mounting direction of a sealing member 40. Here, lateral refers to a direction parallel to an axis k of the main body 41.

Specifically, a side of the protrusion 423 of the securing structure 42 facing the main body 41 abuts firmly against an inner side of a member to be sealed 50, a side of the main body 41 facing the protrusion 423 abuts firmly against an outer side of the member to be sealed 50, and the lateral dimension d3 of each protrusion 423 along the main body 41 is larger than the lateral dimension d4 of the accommodating portion 431 along the main body 41. Therefore, parts of the securing structure 42 other than the protrusion 423 may be limited between the protrusion 423 and the main body 41 to reinforce the connection of the securing structure 42 with a positioning structure 43, such that securing between the member to be sealed 50 and the sealing component 40 is more effective, and sealing of the sealing member 40 for the member to be sealed 50 is more effective.

With respect to the sealing member 40 provided in the embodiment of the present application, with the protrusion 423 greater than the accommodating portion 431 in dimension provided at one end of the securing structure 42 away from the main body 41, parts of the securing structure 42 other than the protrusion 423 may be limited in the positioning structure 43 along the mounting direction after the securing structure 42 is connected to the positioning structure 43, to further reinforce a connection between the securing structure 42 and the positioning structure 43, such that sealing of the sealing member 40 for the member to be sealed 50 is more effective.

As shown in FIGS. 3 and 4, in some embodiments, there are multiple securing structures 42 to enhance the strength of connection between the sealing member 40 and the member to be sealed 50.

It can be understood that the member to be sealed 50 may be square, circular in shape, or other irregular shapes. Correspondingly, when the sealing member 40 is fitted onto the member to be sealed 50, the shape remains consistent with that of the member to be sealed 50. An opening of the member to be sealed 50 has a certain circumference. When the sealing member 40 is fitted to the member to be sealed 50, a better securing result is obtained with the sealing member 40 being secured on the member to be sealed 50 through the securing structure 42. Therefore, there is a need for multiple securing structures 42 to secure the member to be sealed 50 at multiple positions of the sealing member 40, such that sliding or slipping-off between the sealing member 40 and the member to be sealed 50 is thus limited at multiple angles, and the strength of connection between the sealing member 40 and the member to be sealed 50 is enhanced.

Exemplarily, as shown in FIGS. 3 and 4, the connection between the member to be sealed 50 and the sealing member 40 is rectangular in structure. It can be understood that when a single side of the sealing member 40 is longer, more securing structures 42 are needed for securing the main body 41. Determining the number of corresponding securing structures 42 according to the length of the single side allows securing of the securing structures 42 for the sealing member 40 to be more effective. As a result, 4 securing structures 42 are provided on a long side of the main body 41 of the sealing member 40, and 3 securing structures 42 are provided on a short side of the main body 41 of the sealing member 40, such that the sealing member 40 is secured on the member to be sealed 50 in multiple directions through the 14 securing structures 42 while ensuring that each of the long sides and short sides is well secured.

It should be noted that in some embodiments, the multiple securing structures 42 are distributed in a spaced manner on the main body 41 of the sealing member 40. A distribution plan may be determined depending on the shape of the member to be sealed 50. For example, the securing structures 42 may be distrusted on the main body 41 at equal intervals or at unequal intervals, which is not limited in the present application.

Optionally, the shape of the sealing member 40 may be kept consistent with that of the member to be sealed 50 prior to fitting to the member to be sealed 50; or the sealing member 40 is circular or oval in shape and matches the member to be sealed 50 in dimension prior to fitting to the member to be sealed 50, and the sealing member 40 is deformed to form a shape matching the member to be sealed 50 after the sealing member 40 is fitted to the member to be sealed 50.

With respect to the sealing member 40 provided in the embodiment of the present application, with the multiple securing structures 42, the sealing member 40 may be secured on the member to be sealed 50 in all bearings at multiple angles, thereby enhancing the strength of connection between the sealing member 40 and the member to be sealed 50 through the connection of the multiple securing structures 42 to the positioning structure 43.

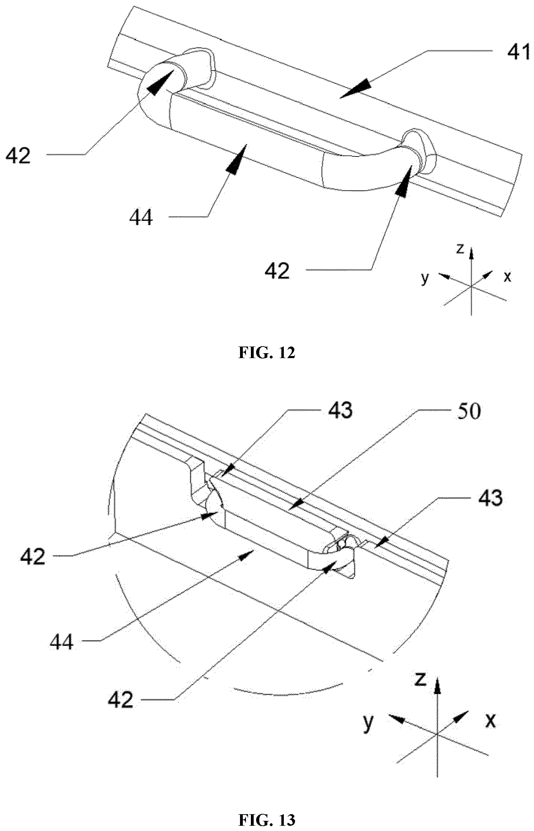

FIG. 12 is a partially enlarged view of another sealing member 40 provided in an embodiment of the present application. As shown in FIG. 12, in some embodiments, the sealing member 40 further includes a connecting segment 44, and the connecting segment 44 is used to connect two adjacent securing structures 42. The connecting segment 44 and the two adjacent securing structures 42 enclose to form a circle, such that securing between the sealing member 40 and a member to be sealed 50 is reinforced.

With the two adjacent securing structures 42 connected through the connecting segment 44, a closed elastic member may be formed. Both ends (i.e., the securing structures 42) of the closed elastic member are connected to a positioning structure 43 of a main body 41, and the connecting segment 44 is allowed to tighten and secure a catch formed between two positioning structures 43 on the member to be sealed 50, such that securing between the sealing member 40 and the member to be sealed 50 is more effective. When a mounting direction of the closed elastic member is wrong, as a recess 421 of the securing structure 42 is not connected to the positioning structure 43, the securing structure 42 protrudes from the member to be sealed 50 to remind a user that current mounting is wrong. Therefore, it is effectively prevented that the sealing member 40 is mounted reversely.

Optionally, the connecting segment of the closed elastic member may be parallel to the main body of the sealing member 40. There is a gap between the connecting segment of the closed elastic member and the main body of the sealing member 40. At fitting of the closed elastic member to the catch, the catch is placed in the gap, and is tightened and secured under the elastic action of the closed elastic member, such that the sealing member 40 is secured on the member to be sealed 50 through the cooperation of the closed elastic member with the catch.

FIG. 13 is a schematic diagram for a connection between another sealing member 40 with a member to be sealed 50 provided in an embodiment of the present application. Exemplarily, as shown in FIG. 13, a catch may be a T-shaped structure. Along a direction of a main body 41, a dimension of the top of the catch is larger than the diameter of an inner circle of a closed elastic member, such that the closed elastic member does not slip out from the top of the catch when placed over the catch.

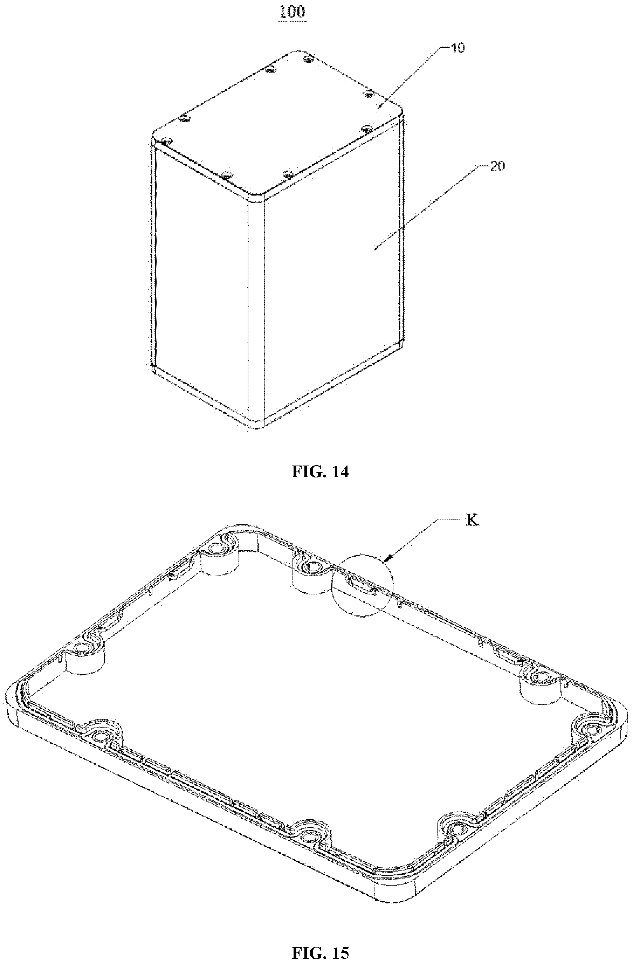

The catch that cooperates with the closed elastic member is designed as the T-shaped structure, so that the closed elastic member is tightened and secured at the bottom of the catch with a smaller dimension. The top of the catch having a larger dimension than the bottom can prevent the closed elastic member from sliding out from the bottom. With the T-shaped structure, the movement of the closed elastic member may be restrained simply and effectively, achieving effective securing. Optionally, referring to FIG. 13, a height of the top of the catch is less than or equal to that of a sealing face of the member to be sealed 50, so that no additional space may be occupied when the closed elastic member is fitted into the catch. FIG. 14 is a schematic diagram of a fitting result of a casing of a battery 100 provided in the present application. As shown in FIG. 14, a member to be sealed 50 is a housing 20 and a cover 10 of the battery 100. A sealing member 40 cooperates with the cover 10 to achieve securing and sealing. A catch is located in a positioning structure 43 of a sealing face of the cover 10, and the top of the catch is allowed to be lower than the sealing member 40 of the cover 10. A closed elastic member fitted may be allowed not to be exposed from a surface of the cover 10 but occupy a relatively small space. There is no need to leave a fitting space for the closed elastic member or the sealing member 40. And the casing of the battery 100 that is sealed may be allowed to not produce any unnecessary protruding parts. There is also no need for the casing of the battery 100 to leave space for fitting the sealing member 40. Therefore, the casing of the battery 100 remains mall in size, which facilitates the installation and use of the battery 100 and keeps the casing of the battery 100 neat.

FIG. 15 is a schematic diagram for a connection of another sealing member 40 with a member to be sealed 50 provided in an embodiment of the present application. As shown in FIG. 15, two adjacent securing structures 42 are connected through a connecting segment 44, the connection between the sealing member 40 and the member to be sealed 50 is further reinforced, and in turn, sealing between the sealing member 40 and the member to be sealed 50 is more effective.

With respect to another sealing member 40 provided in the embodiment of the present application, connection between the securing structure 42 and the positioning structure 43 is reinforced through the connecting segment 44, and relative movement of the securing structure 42 and the positioning structure 43 is further restricted in a mounting direction, to further prevent the securing structure 42 from slipping off from the positioning structure 43, such that the connection between the sealing member 40 and the member to be sealed 50 is reinforced, and sealing between the sealing member 40 and the member to be sealed 50 is more effective.

It should be noted that the technical features in the above embodiments provided by this application may cooperate with one another and appear on the same sealing member 40. For example, the main body 41 of the sealing member 40 may be provided with multiple securing structures 42, excluding the connecting segment 44, or may be provided with multiple securing structures 42, with every two adjacent securing structures 42 connected by the connecting segment 44, or may be provided with multiple securing structures 42, in which some adjacent securing structures 42 are connected through the connecting segment 44. In actual production and use, matching may be freely done according to the shape of the member to be sealed 50 to achieve more effective securing, which is not limited in the present application.

An embodiment of the present application further provides a battery 100, including a battery 100 cell, a box body, a cover 10, and a sealing member 40 according to any one of the above embodiments. One end of the box is provided with an opening, the cover 10 covers the opening, and the cover 10 and the box form a sealed accommodating cavity through the sealing member 40 for accommodating the battery 100 cell cover 10.

It can be understood that the cover 10 and a housing 20 of the battery 100 may be the member to be sealed 50 in the above embodiments, and the cover 10 and the housing 20 need to be securely connected to form an accommodating cavity. For example, a positioning structure 43 of the cover 10 is provided with a structure that mutually cooperates with the housing 20, such that the cover 10 and the housing 20 are secured when the cover 10 and the housing 20 are brought in covering fit, and that relative displacement of the housing 20 and the cover 10 is limited. Therefore, relative displacement of the sealing member 40 and the member to be sealed 50 is limited, and the sealing effect and securing effect are further improved.

An embodiment of the present application further provides an electrical apparatus, including a battery 100 according to the foregoing embodiments, the battery 100 being used to provide electrical energy. Characteristics of the electrical apparatus have been described in the above embodiments, and will not be described again in this embodiment.

To sum up, with respect to the sealing member 40, the battery 100, and the electrical apparatus described above, with the securing structure 42 provided on the main body 41 of the sealing member 40, and the recess 421 provided on the surface of the securing structure 42 facing the member to be sealed 50, when the sealing member 40 is fitted to the member to be sealed 50, an obvious projection will be produced while a mounting error occurs to the securing structure 42 in the mounting direction and plays a fool-proof role, thereby promptly reminding that the mounting direction is wrong, effectively lowering time and effort consumption for repeated mounting, and effectively preventing reverse mounting of the sealing member 40.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A sealing member, for sealing of a member to be sealed, the sealing member comprising:
a main body; and
a securing structure provided on the main body, the securing structure being connected to a positioning structure on the member to be sealed, to secure the sealing member on the member to be sealed;
wherein the surface of the securing structure facing the member to be sealed is provided with a recess, the recess being recessed in a direction away from the positioning structure to prevent the sealing member from being fitted reversely.

2. The sealing member according to claim 1, wherein the positioning structure is provided with an accommodating portion which is used for accommodating the securing structure to achieve securing of the sealing member and the member to be sealed.

3. The sealing member according to claim 2, wherein in a mounting direction of the sealing member, a dimension of the accommodating portion is equal to a distance between an upper surface of the securing structure and a bottom wall of the recess, the upper surface being a surface on the securing structure corresponding to the recess.

4. The sealing member according to any one of claims 1 to 3, wherein the securing structure is in interference fit with the positioning structure to achieve securing between the sealing member and the member to be sealed.

5. The sealing member according to claim 4, wherein an interference face is formed on both sides of the securing structure, the interference face is in interference fit with the positioning structure, and the interference amount between the interference face and the positioning structure is 0-0.3 mm.

6. The sealing member according to any one of claims 1 to 5, wherein an end of the securing structure away from the main body is provided with a protrusion, and a lateral dimension of the protrusion along the main body is greater than that of the accommodating portion along the main body, so that securing between the securing structure and the member to be sealed is reinforced in the mounting direction of the sealing member.

7. The sealing member according to any one of claims 1 to 6, wherein there are multiple securing structures to enhance the strength of connection between the sealing member and the member to be sealed.

8. The sealing member according to claim 7, wherein the multiple securing structures are distributed in a spaced manner on the main body of the sealing member.

9. The sealing member according to claim 7 or 8, wherein the sealing member further comprises a connecting segment, the connecting segment is used to connect two adjacent securing structures, and the connecting segment and the two adjacent securing structures enclose to form a circle, such that securing between the sealing member and the member to be sealed is reinforced.

10. The sealing member according to claim 9, wherein the connecting segment and the two adjacent securing structures enclose to form one closed elastic member, a catch is formed at a position on the member to be sealed between the two adjacent securing structures, and the connecting segment is tightened and secured on the catch.

11. The sealing member according to claim 10, wherein the catch is configured as a T-shaped structure, and a dimension of the top of the catch along a direction of the main body is larger than the diameter of an inner circle of the closed elastic member.

12. The sealing member according to claim 10 or 11, wherein a height of the top of the catch is less than or equal to a height of a sealing face of the member to be sealed.

13. A battery, comprising:
a battery cell;
a box, one end of the box being provided with an opening;
a cover, covering the opening; and
the sealing member according to any one of claims 1 to 12, the cover and the box forming a sealed accommodating cavity through the sealing member for accommodating the battery cell.

14. An electrical apparatus, comprising the battery according to claim 13, the battery being used to provide electrical energy.
